# EUROPÄISCHE PATENTSCHRIFT

(11) **EP 0 717 064 B1**
(45) Veröffentlichungstag und Bekanntmachung des Hinweises auf die Patenterteilung: **10.03.1999**
(21) Anmeldenummer: 95119844.9
(22) Anmeldetag: 15.12.1995
(51) Int. Cl.: C08G 69/44

(54) **Teilkristalline Block-Copolyesterpolyamide**
Semi-crystalline block copolyesteramides
Copolyesteramides blocs semi-cristallins

(30) Priorität: 16.12.1994 DE 4444948
(43) Veröffentlichungstag der Anmeldung: 19.06.1996
(73) Patentinhaber: EMS-INVENTA AG, 8001 Zürich (CH)
(72) Erfinder: Hoff, Heinz, Dr. rer. nat., CH-7015 Tamins (CH)
(74) Vertreter: Becker, Eberhard

(56) Entgegenhaltungen:
- EP-A- 0 508 730
- EP-A- 0 559 404
- WO-A-93/13814
- DE-A- 3 435 053
- DATABASE WPI Section Ch, Week 7943 Derwent Publications Ltd., London, GB; Class A23, AN 79-78350B & JP-A-54 119 593 ( AGENCY OF IND SCI TECH) , 17.September 1979
- DATABASE WPI Section Ch, Week 7943 Derwent Publications Ltd., London, GB; Class A23, AN 79-78351B & JP-A-54 119 594 ( AGENCY OF IND SCI TECH) , 17.September 1979
- DATABASE WPI Section Ch, Week 7943 Derwent Publications Ltd., London, GB; Class A23, AN 79-78352B & JP-A-54 119 595 ( AGENCY OF IND SCI TECH) , 17.September 1979

## Beschreibung

Die Erfindung betrifft neue biologisch abbaubare, teilkristalline Block-Copolyesterpolyamide aus mindestens zwei, chemisch unterschiedlich strukturierten Segmenten, davon mindestens ein Polyester (PES)- oder Copolyester (CoPES)-Block mit einer zahlenmittleren Molmasse von 340 bis 10.000 g/Mol und ein Polyamid (PA)-oder ein Copolyamid (CoPA)-Block mit einer zahlenmittleren Molmasse von 400 bis 3.000 g/Mol. Zusätzlich können Copolyesteramid (CoPEA)-Blöcke mit einer zahlenmittleren Molmasse von 500 bis 5.000 g/Mol eingesetzt werden.

Die Erfindung betrifft weiterhin ein Polykondensationsverfahren zur Herstellung dieser teilkristallinen Block-Copolyesterpolyamide sowie die Verwendung der Block-Copolyesterpolyamide zur Herstellung von Fasern, Folien, Formkörpern und Schmelzkleber.

Die aus den erfindungsgemäßen Polymeren hergestellbaren Formteile sind biologisch abbaubar, sowie kompostierbar und daher insbesondere z.B. für Anwendungen im Verpackungs-, Hygiene- und Medizinalbereich geeignet.

Die japanischen Patentanmeldungen JP 54 119 593, JP 54 119 594, JP 54 119 595, JP 54 120 727, JP 80 031 207 und EP 0 508 730 beschreiben Polyamide, hergestellt durch Kettenaustauschreaktionen von hochmolekularen Polyestern und Polyamiden unter Einwirkung von Katalysatoren. Auf Grund der thermodynamischen Unverträglichkeit von Polyester (PES) und Polyamid (PA) und der zum Teil recht kurzen Verweilzeiten im Extruder, entstehen Produkte, die Mischungen aus PA, PES und Polyesteramid (PEA) darstellen. Die Ester- bzw. Amidbindungen sind statistisch verteilt. Teure Herstellung auf Grund hochmolekularer Ausgangsstoffe, undefinierter Aufbau, besonders infolge uneinheitlicher Blocklängenverteilung, und meist ungenügende mechanische Eigenschaften sowie nur mäßige biologische Abbaubarkeit zeichnen diese Materialien aus.

EP 0 559 404 beschreibt Hydrolyse-empfindliche Polyamide, hergestellt durch Extrusion von hochmolekularen Polyamiden mit niedermolekularen Alkylestern aliphatischer Carbonsäuren. Auch hierbei resultieren statistische Polyesteramide mit nur sehr begrenzter Konzentration an Esterbindungen.

WO 93/13814 beschreibt ein bioabsorbierbares PEA für medizinische Anwendungen. Die streng alternierende Abfolge der Komponenten wird durch eine zweistufige Synthese erreicht; zunächst wird ein Diamin mit Glykolsäure zum entsprechenden Diamiddiol umgesetzt, das dann mit Carbonsäuredichloriden zu den hochmolekularen PEA kondensiert wird. Beide Reaktionsschritte werden in Lösung ausgeführt.

J. Appl. Polym. Sci. 46, 1813 (1992) beschreibt Polyesteramide, die L-Lactid-Sequenzen enthalten. Zur Synthese dieser PEA werden Lactid-Oligomere, Diamine und Carbonsäuredichloride in Chloroform umgesetzt, so daß statistische Multi-blockcopolymere gebildet werden. Wesentlich ist, daß im ersten Reaktionsschritt das OH-terminierte Lactidoligomer durch ein Überschuß an Säuredichlorid umfunktionalisiert werden muß. Solche Polymere sind nur durch eine aufwendige Synthese erhältlich.

Das in DE 34 350 53 beschriebene Block-Copolyesteramid enthält im OH-terminierten PES-Block mindestens 50 Mol-% Terephthalsäure, bezogen auf den Säureanteil. PEA nach US 41 16 943 enthalten 100 Mol-% aromatische Dicarbonsäuren. Ein so hoher Anteil an aromatischen Monomeren reduziert die Geschwindigkeit des biologischen Abbaus beträchtlich oder führt zu bioresistenten Materialien.

US 41 29 715 beschreibt die Synthese von segmentierten PEA unter Verwendung von carboxylterminierten PES und Diisocyanaten.

Die als Schmelzkleber eingesetzte PEA nach DE 42 34 305 werden ebenfalls nach der Isocyanat-Methode hergestellt. Die Hartsegmente dieser Polyesteramide bestehen aus Amidsequenzen mit lediglich zwei Amidgruppen, die durch Umsetzung der Säureendgruppen der Oligoester mit aliphatischen oder cycloaliphatischen Isocyanaten gebildet werden. Der Anteil der Estersegmente beträgt 80 bis 95 Gew.-%, womit im wesentlichen die Polyestereigenschaften dominieren.

Die zuvor beschriebenen PEA oder Herstellverfahren weisen deutliche Nachteile oder Mängel auf. Die Herstellung von PEA, basierend auf hochmolekularen PA und PES, ist kostenintensiv und liefert Produkte mit undefinierter Zusammensetzung und Struktur. Dies bedingt in aller Regel auch ungenügende Eigenschaften, insbesondere auch mangelnde biologische Abbaubarkeit. Die Verwendung von Lösungsmitteln, Säurechloriden, speziellen Reagenzien und mehrstufige Reaktionen sind aufwendig und liefern teure Produkte und sind nur bedingt für industrielle Großproduktionen geeignet. Höhere Anteile an aromatischen Monomeren reduzieren die Abbauneigung oder verhindern sie völlig.

Daher ist es Aufgabe der Erfindung neue teilkristalline Block-Copolyesterpolyamide aus mindestens zwei chemisch unterschiedlich strukturierten Segmenten bereitzustellen, die sich durch einen definierten Aufbau und eine einfache Synthese auszeichnen und die die vorgenannten Nachteile des Standes der Technik nicht aufweisen. Die neuen Block-Copolyesterpolyamide sollen sich durch gute mechanische und thermische Eigenschaften auszeichnen. Weiterhin soll ein Verfahren zur Herstellung dieser Block-Copolyesterpolyamide angegeben werden. Aus den neuen Polymeren sollen Formteile, Folien, Fasern und Schmelzkleber hergestellt werden können, die sich ebenfalls durch einen definierten Abbau nach deren Gebrauch, d.h. im Kompost auszeichnen.

Diese Aufgabe wird durch die neuen teilkristallinen Block-Copolyesterpolyamide gemäß Anspruch 1 sowie durch das Verfahren gemäß Anspruch 23 gelöst. Weiterhin wird diese Aufgabe gelöst durch die Verwendung gemäß Anspruch 22 sowie durch die Formkörper gemäß Anspruch 26 und die Schmelzkleber gemäß Anspruch 27.

In den Unteransprüchen sind vorteilhafte Ausführungsformen der Erfindung enthalten.

Die Erfindung betrifft somit segmentierte Block-Copolyesterpolyamide, bestehend aus mindestens zwei chemisch unterschiedlich strukturierten Segmenten bzw. Blöcken, wovon mindestens ein PES- oder CoPES-Block mit einer zahlenmittleren Molmasse von 340 bis 10.000 g/Mol, bevorzugt 340 bis 6000 g/Mol, besonders bevorzugt 340 bis 3000 g/Mol, ganz bevorzugt 340 bis 1500 g/Mol und ein PA-oder CoPA-Block mit einer zahlenmittleren Molmasse von 400 bis 3.000 g/Mol, bevorzugt 400 bis 2000 g/Mol, ganz bevorzugt 1000 bis 2000 g/Mol. Zusätzlich können CoPEA-Blöcke mit einer zahlenmittleren Molmasse von 500 bis 5.000 g/Mol eingesetzt werden. Bevorzugt ist eine maximale zahlenmittlere Molmasse für das PA-Segment und eine minimale zahlenmittlere Molmasse für das PES-Segment. PA- und PES-Blöcke sind überwiegend aus aliphatischen Monomerbausteinen aufgebaut und enthalten nicht mehr als 20 Mol-% aromatische Monomere, z. B. Isophthalsäure- und Terephthalsäure-Einheiten. Die Verknüpfung der Telechele erfolgt durch Kondensation. Die eingesetzten PA- und CoPA-Blöcke sind bevorzugt Carboxyl-terminiert und weisen mindestens 95% Carboxyl-Endgruppen auf, während die PES-, CoPES- und CoPEA-Blöcke bevorzugt OH-terminiert sind und mindestens 95% OH-Endgruppen aufweisen. PES- oder CoPES- oder CoPEA-Blöcke besitzen eine Funktionalität von mindestens 2, insbesondere von 2 bis 4. Die benötigten Blöcke werden ausgehend von den Monomeren aufgebaut.

Die Erfindung betrifft des weiteren ein Verfahren zur Herstellung von Block-Copolyesterpolyamiden. Die Polyamid-bildenden Komponenten werden nach üblichlicher Weise auf eine exakt festgelegte zahlenmittlere Molmasse vorpolymerisiert und nach Zusatz definierter PES-Blöcke, CoPES-Blöcke oder CoPEA-Blöcke in der Schmelze unter Vakuum fertigkondensiert. Dabei wird die Druck- und Temperaturführung sowie der Katalysator und die Katalysatorkonzentration so ausgelegt, daß keinerlei Austauschreaktion ablaufen und damit PA- und PES-Segmente vor und nach der Kondensation gleiche mittlere Molmassen und Molmassenverteilungen aufweisen. Auf Grund der relativ kurzen Blocklängen der Vorkondensate wird bereits bei Beginn der Kondensation eine hinreichend gute Durchmischung der Komponenten erzielt, was sich auch in der spontanen Umsetzung der Oligomerkomponenten und kurzen Reaktionszeiten niederschlägt.

Wie oben ausgeführt ist, wird die Druck- und Temperaturführung sowie die Katalysatorkonzentration so angepaßt, daß die zahlenmittleren Molmassen der eingesetzten Polymer-Blöcke während des zweiten Polykondensationsschrittes nicht verändert werden. In Schritt a) des erfindungsgemäßen Verfahrens (Vorpolymerisation) werden daher Temperaturen von 180 bis 260 °C und ein Druck im Bereich von Atmosphärendruck bis 18 bar angelegt. Im Schritt c) des erfindungsgemäßen Verfahrens beträgt die Temperatur 180 bis 260 °C, der Druck wird stufenweise entspannt und dann ein Vakuum angelegt (vgl. auch Patentanspruch 25). Der Katalysator kann im erfindungsgemäßen Verfahren in Mengen von 0,05 bis 0,2 Gew.-%, bezogen auf den Gesamtansatz, eingesetzt werden.

Die benötigten Polyamidsegmente basieren auf Polyamid 6, 6/6, 6/9, 6/10, 6/11, 6/12, 6/36, 11, 12, 12/12 sowie auf Copolyamiden und Multipolyamiden, basierend auf den Dicarbonsäuren C₂-C₄₄, insbesondere Dicarbonsäuren mit 2 bis 18 C-Atomen und Dicarbonsäuren mit 36 C-Atomen und mit 44 C-Atomen, und Diaminen C₂-C₁₀ sowie Lactam-6, Lactam-12, Isophthalsäure (IPS) und Terephthalsäure (TPS), wobei die Konzentration der aromatischen Säuren 20 Mol-% nicht überschreitet. Die PA-Blöcke können ebenso erhalten werden durch Polykondensation der entsprechenden Salze von Diamin und Dicarbonsäure.

Durch Überschuß an Dicarbonsäuren werden Carboxyl-terminierte, durch Überschuß an Diaminen werden Amino-terminierte PA-Blöcke generiert. Wesentlich für die erfindungsgemäßen, insbesondere biologisch abbaubaren Materialien ist, daß die zahlenmittlere Molmasse der PA-Blöcke 3.000 g/Mol nicht übersteigt, vorzugsweise 2000 g/Mol nicht übersteigt.

Die Polyestersegmente werden durch Polykondensation von überwiegend linear aliphatischen Dicarbonsäuren oder deren Ester mit linear und/oder verzweigten aliphatischen Alkoholen sowie von Lactonen und Hydroxycarbonsäuren erhalten. In einer bevorzugten Ausführungsform sind die Polyester- und Copolyesterblöcke aus Lactonen oder Hydroxycarbonsäuren aufgebaut und weisen durch geringe Anteile an höherfunktionellen aliphatischen Alkoholen eine Funktionalität von mehr als 2 auf. Die Polyester oder Copolyesterblöcke sind weiter bevorzugt aus bifunktionellen Alkoholen, insbesondere aus solchen mit 2 bis 10 C-Atomen und aus Dicarbonsäuren, besonders aus solchen mit 2 bis 44 C-Atomen, insbesondere aus solchen Dicarbonsäuren mit 2 bis 18 C-Atomen und mit 36 C-Atomen und mit 44 C-Atomen, aufgebaut.

Für die Synthese der PES-Segmente geeignete Dicarbonsäuren sind Bernsteinsäure, Glutarsäure, Adipinsäure, Pimelinsäure, Azelainsäure, Sebacinsäure und Dodecandicarbonsäure, geeignete Diole sind Ethylenglykol, 1,3-Propandiol, 1,2-Propandiol, 1,4-Butandiol, 1,5-Pentandiol, 1,6-Hexandiol, 1,8-Octandiol, 1,10-Decandiol, Diethylenglykol, Dipropylenglykol und Glycerin, Trimethylolpropan, Neopentylglykol, geeignete Lactone sind Caprolacton, Butyrolacton. Insbesondere geeignet sind a, w-Dihydroxypolyester, basierend auf Oligomeren der α, β, γ und ω-Hydroxycarbonsäuren, deren Cooligomere, die durch ringöffnende Polymerisation von cyclischen Estern und Lactonen erhalten werden. Bevorzugte cyclische Ester dieser Art sind L,L-Dilactid, D,D-Dilactid, D-L-Dilactid, Diglycolid oder die Lactone β-R-Butyrolacton, β-S-Butyrolacton, β-rac-Butyrolacton und ε-Caprolacton oder deren Gemische. Die Ringöffnung erfolgt mit aliphatischen Alkoholen mit einer Funktionalität von 2 bis 4 und einer Kettenlänge von C₂-C₈. Die Konzentration und die Funktionalität der eingesetzten Alkohole bestimmt die Molmasse und die Funktionalität der gebildeten Makroalkohole.

Für die Synthese der statistischen Copoiyesteramidsegmente kommen die gleichen Monomere zum Einsatz, die bereits als Bestandteile der PA- und PES-Segmente beschrieben wurden. Zusätzlich werden C₂-C₈ Aminoalkohole, wie z.B. Ethanolamin und 1,3-Propanolamin eingesetzt. Die genannten Monomeren werden vorzugsweise mit einem Überschuß an Diolen in einer simultanen Reaktion umgesetzt, wobei statistische OH-terminierte Copolyesteramide resultieren. Das Verhältnis Amid/Ester-Bindungen beeinflußt in entscheidenem Maße den Grad der Phasenseparation zwischen Hart- und Weichsegmenten und damit die thermischen, mechanischen und für den Bioabbau relevanten Eigenschaften. Erfindungsgemäß soll das Verhältnis Ester/ Amid der PEA-Segmente nicht unter 1,2 liegen, bevorzugt zwischen 1,2 und 20,0 liegen.

Die erfindungsgemäßen Block-Copolyesterpolyamide bestehen mindestens aus einem PES-Segment und einem PA-/CoPA-Segment und fakultativ aus einem CoPEA-Segment. Die einzelnen Segmente sind bevorzugt durch Esterbindungen verknüpft.

Mit Vorteil werden Segment-Kombinationen, wie PES1/PES2, PES1/CoPEA und PES1/PES2/CoPEA eingesetzt.

Diese Esterblöcke PES1 und PES2 innerhalb eines Block-Copolyesterpolyamids unterscheiden sich auf Grund der zahlenmittleren Molmasse und/oder der chemischen Zusammensetzung und/oder der Funktionalität oder Kombinationen davon.

Zur Eigenschaftssteuerung ist insbesondere auch der Einbau von CoPEA-Segmenten wichtig. Ein Charakteristikum der statistischen CoPEA-Segmente ist das Ester/Amid-Verhältnis, da hierdurch das Ausmaß der Phasenseparation eingestellt werden kann. Das Ester/Amid-Verhältnis soll nicht unter 1,2 liegen, bevorzugt zwischen 1,2 und 20 liegen.

Die erfindungsgemäßen Block-Copolyesterpolyamide weisen ein Ester/Amid-Verhältnis im Bereich von 15 bis 0,2, vorzugsweise zwischen 15 und 0,6, ganz bevorzugt von 4 bis 0,37, auf.

Durch Variation der beiden Ester/Amid-Verhältnisse können Materialien mit völlig verschiedenen Eigenschaften hergestellt werden.

Eine weitere Steuerungsmöglichkeit der Materialeigenschaften ergibt sich durch die Verwendung von PES- und CoPEA-Segmenten, die eine Funktionalität größer 2 aufweisen. Hierbei werden je nach Konzentrationsverhältnis der Komponenten verzweigte oder vernetzte Block-Copolyesterpolyamide erhalten.

Auf Grund der thermodynamischen Unverträglichkeit der eingesetzten Segmentbausteine tritt bei Abkühlen der Block-Copolyesterpolyamid-Schmelze eine Phasenseparation ein.

Die Polyamidsegmente bilden die Hart-, die Polyestersegmente die Weichsegmente.

Je nach Ester/Amid-Verhältnis und der Molmasse von Hart- und Weichsegmenten liegen Block-Copolyesterpolyamide vor, deren Eigenschaftsspektrum stufenlos vom PA- bis zum PES-Profil reicht. Mittlere Zusammensetzungen mit deutlicher Phasenseparation, weisen Eigenschaften von thermoplastischen Elastomeren auf.

Durch Einbau von CoPEA-Segmenten kann der Grad der Phasenseparation gesteuert werden. Damit die Block-Copolyesterpolyamide die erfindungsgemäßen Eigenschaften, insbesondere die biologische Abbaubarkeit besitzen, darf das Ester/AmidVerhältnis innerhalb der CoPEA-Segmente nicht unter 1,2 liegen.

Bei linearen Block-Copolyesterpolyamiden wird die Kristallitgröße der PA-Mikrodomäne nur wenig durch die chemische Zusammensetzung sowie Molmasse der anderen Segmentbausteine beeinflußt. Der Schmelzpunkt der Block-Copolyesteramide weicht daher nur geringfügig vom Schmelzpunkt der reinen PA-Blöcke (Vorkondensate) ab. Durch die Teilkristallinität der Block-Copolyesteramide sind hohe Schmelzpunkte realisierbar.

Verzweigte oder teilweise vernetzte Block-Copolyesterpolyamidezeigen gegenüber den linearen Analoga eine Schmelzpunktsdepression, die direkt mit der Konzentration und der Funktionalität der PES- und CoPEA-Segmente gekoppelt ist.

Auf Grund der Struktur der Block-Copolyesterpolyamide tritt beim Abkühlen eine mehr oder weniger ausgeprägte Phasenseparation ein, wobei die PA-Segmente durch Kristallisation physikalische Netzpunkte ausbilden, und die PES- und CoPEA-Segmente überwiegend amorph vorliegen. Je ausgeprägter die Phasenseparation, desto stärker werden Modul und Härte der Block-Copolyesterpolyamide im Vergleich zu den reinen PA reduziert.

Durch Variation der Anteile von Hart- und Weichsegementen, deren Zusammensetzung, Molmasse und Molmassenverteilung, läßt sich ein breites Eigenschaftsspektrum realisieren.

Die Weichsegmente bestimmen im wesentlichen die Hydrolysebeständigkeit und die Flexibilität bei tiefen Temperaturen.

Lineare Block-Copolyesterpolyamide besitzen den Schmelzpunkt der reinen Polyamidblöcke (90 bis 265 °C), verzweigte oder vernetzte Typen haben, der Konzentration an höher funktionellen Segmentbausteinen entsprechend, erniedrigte Schmelzpunkte.

Der Kristallinitätsgrad der Copolyesteramide hängt stark von der Zusammensetzung der zahlenmittleren Molmasse und der Funktionalität der verwendeteten PES- und CoPEA-Blöcke ab. Durch eine verstärkte Ankopplung der Phasen bei Verwendung von CoPEA-Segmenten steigt die Kristallinität überproportional an.

Wie oben bereits erwähnt, bestimmen im wesentlichen die Weichsegmente das Hydrolyseverhalten der Block-Copolyesterpolyamide. Untersuchungen haben überraschenderweise gezeigt, daß selbst bei kleinen Anteilen an Weichsegmenten das Hydrolyseverhalten der PES- und CoPEA-Segmente nur wenig gegenüber dem reinen Polyester- oder CoPEA-Polymeren verändert werden. Es wurden ähnliche Geschwindigkeitskonstanten für die reinen und eingebauten Blöcke gemessen. Das Verhältnis der Geschwindigkeitskonstanten für Polyester- und Polyamid-Segmente beträgt ca. 4,5.

Für die erfindungsgemäßen teilkrisallinen Block-Copolyesterpolyamide ist es bevorzugt, daß mindestens zwei lineare Polyester- oder Copolyester-Blöcke vorhanden sind, deren zahlenmittlere Molmassen sich um mindestens 500 g/Mol, bevorzugt um 1.000 g/Mol unterscheiden. Weiter ist es bevorzugt, daß mindestens ein linearer Polyester- oder Copolyester-Block mit einer zahlenmittleren Molmasse von 500 bis 10.000 g/Mol und mindestens ein höherfunktioneller Polyester- oder Copolyester-Block mit einer zahlenmittleren Molmasse von 340 bis 3.000 g/Mol vorhanden ist. Weiter kann zusätzlich mindestens ein statistischer Copolyester-Block mit einer einheitlichen zahlenmittleren Molmasse zwischen 500 und 5.000 g/Mol vorhanden sein.

Die erfindungsgemäßen Block-Copolyesterpolyamide haben Folyamid-ähnliche Eigenschaften, sind allerdings um ein Vielfaches besser abbaubar. Damit die Abbaubarkeit sichergestellt ist, ist es erforderlich, den in Anspruch 1 beanspruchten Aufbau aus den dort definierten Segmenten einzuhalten.

Die erfindungsgemäße Block-Copolyesterpolyamide eignen sich zur Herstellung von Fasern, Folien, Formkörpern und Schmelzklebern. Die Formkörper können durch Blasformen, Extrudieren, Spitzgießen und Schmelzspinnen hergestellt werden. Der Schmelzkleber ist aus den teilkristallinen Block-Copolyesterpolyamiden durch Konfektionieren in bekannter Weise herstellbar.

Überraschenderweise werden die erfindungsgemäßen Block-Copolyesterpolyamide, die sehr gute mechanische und thermische Eigenschaften aufweisen und eine gute Verarbeitbarkeit aufweisen, gleich schnell oder schneller biologisch abgebaut als die entsprechenden hochmolekularen Polyamiden, Polyester und statistischen Polyesteramide.

In einem Standard-Kompost wurden bereits nach 2 Wochen Aufenthalt Löcher, Rißbildung und ein starker Abfall der Festigkeit und Elastizität festgestellt. Nach 6 bis 12 Wochen Kompostierung desintegrierten fast alle untersuchten Proben in der Weise, daß keinerlei Reste oder Bruchstücke mehr auffindbar waren. Da Siebe mit einer Maschenweite von 2 x 2 mm verwendet wurden, müssen die eventuell nach dieser Zeit noch vorhandenen Polymerteile eine Größe kleiner als 2 mm Kantenlänge aufweisen. Da nach G. Shama, D.A.J. Wase, Int. Biodetoriation Bull., 17, 1-9 (1981) bekannt ist, daß Oligomere auf der Basis aliphatischer Polyamide und Polyester mit niedrigem Polymerisationsgrad biologisch abbaubar sind, ergibt sich, daß nach enzymatischer und hydrolytischer Zerlegung der Block-Copolyesterpolyamide in Oligomere, deren Abbau in gleichem Milieu gegeben ist.

So konnte anhand von Proben mit einer Kompostierungsdauer von 4 Wochen durch Analyse der Zusammensetzung und der Molmassenverteilung nachgewiesen werden, daß Polyester- und Polyamid-Segmente deutlich angegriffen und teilweise bereits abgebaut wurden. Ähnlich, wie bei den Hydrolyseuntersuchungen, kann auch bei der Kompostierung von zwei unterschiedlichen Abbaugeschwindigkeiten von Polyester- und Polyamidsegmenten ausgegangen werden.

Damit ist es erfindungsgemäß gelungen, ein Produkt bereitzustellen, das eine gute Balance zwischen Wirtschaftlichkeit, Eigenschaftsprofil und biologischem Abbau darstellt.

Die beanspruchten Blockcopolymere erlauben die einmalige Kombination von guten thermischen und mechanischen Eigenschaften, guter Verarbeitung und der vollständigen biologischen Abbaubarkeit, und das über einen Variationsbereich der Eigenschaften, wie er vorher nie beschrieben wurde. Außerdem sind die erfindunggemäßen Block-Copolyesterpolyamide in industriell gängigen Syntheseprozessen ausgehend von kommerziellen Monomeren einfach herstellbar.

Im folgenden wird nun die Erfindung anhand der Beispiele näher beschrieben.

### Beispiele 1 bis 17

### Beispiel 1

185,2 g AH-Salz, 136,7 g Hexamethylendiamin (60 %) und 208,2 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren 400,0 g Polycaprolacton-Diol mit einer mittleren Molmasse von ca. 1000 g/Mol und 0,65 g eines Veresterungskatalysators (z.B. Dibutylzinnsäure) eingetragen. Es wurde Vakuum angelegt, der Enddruck lag bei ca. 1 mbar.

Nach Erreichen einer gewünschten Viskosität (1,4 - 2,0) wurde die Kondensation durch Brechen des Vakuums abgebrochen und die Schmelze ausgetragen. Die Kondensationszeiten betragen je nach Endviskosität in der Regel 1 bis 3 Stunden.

### Beispiel 2

130,7 g AH-Salz, 96,5 g Hexamethylendiamin (60 %) und 147,0 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren 525,0 g Polycaprolacton-Diol mit einer mittleren Molmasse von ca. 2000 g/Mol und 0,8 g eines Veresterungskatalysators eingetragen. Es wurde Vakuum angelegt, der Enddruck lag bei ca. 1 mbar.

### Beispiel 3

152,5 g AH-Salz, 112,6 g Hexamethylendiamin (60 %) und 171,4 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren ein Gemisch bestehend aus 153,1 g Polycaprolacton-Diol mit einer mittleren Molmasse von ca. 1000 g/Mol und 306,3 g eines Polycaprolacton-Diols mit einer mittleren Molmasse von ca. 2000 g/Mol sowie 0,8 g eines Veresterungskatalysators eingetragen. Es wurde Vakuum angelegt, der Enddruck lag bei ca. 1 mbar.

### Beispiel 4

152,5 g AH-Salz, 112,6 g Hexamethylendiamin (60 %) und 171,4 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren ein Gemisch bestehend aus 102,0 g Polycaprolacton-Diol mit einer mittleren Molmasse von ca. 1000 g/Mol und 409,0 g eines Polycaprolacton-Diols mit einer mittleren Molmasse von ca. 2000 g/Mol sowie 0,8 g eines Veresterungskatalysators eingetragen. Es wurde Vakuum angelegt, der Enddruck lag bei ca. 1 mbar.

### Beispiel 5

191,2 g AH-Salz, 141,2 g Hexamethylendiamin (60 %) und 176,1 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren 210,1 g Polycaprolacton-Diol mit einer mittleren Molmasse von ca. 1000 g/Mol und 0,8 g eines Veresterungskatalysators eingetragen. Es wurde Vakuum angelegt, der Enddruck lag bei ca. 1 mbar.

### Beispiel 6

134,9 g AH-Salz, 101,2 g Hexamethylendiamin (60 %) und 192,0 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren 536,2 g Polycaprolacton-Diol mit einer mittleren Molmasse von ca. 1000 g/Mol und 0,8 g eines Veresterungskatalysators eingetragen. Es wurde Vakuum angelegt, der Enddruck lag bei ca. 1 mbar.

### Beispiel 7

115,6 g AH-Salz, 86,8 g Hexamethylendiamin (60 %) und 164,6 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren ein Gemisch bestehend aus 221,8 g Polycaprolacton-Diol mit einer mittleren Molmasse von ca. 1000 g/Mol und 404,1 g eines Polycaprolacton-Diols mit einer mittleren Molmasse von ca. 2000 g/Mol sowie 0,8 g eines Veresterungskatalysators eingetragen. Es wurde Vakuum angelegt, der Enddruck lag bei ca. 1 mbar.

### Beispiel 7a

Als Schmelzkleber wurde eine Siebfraktion PO-500 des Copolyestercopolyamids aus Beispiel 7 verwendet. Der Stoff wurde mit einem Auflagegewicht von 20 g/m² beschichtet und die Beschichtung mittels IR-Strahler gesintert. Zur Bestimmung der Originalhaftung wurde ein Einlagestoff aus Baumwolle mit einem Oberstoff aus Polyesterwolle mit einem Wollanteil von ca. 10 bis 15 % bei 165 °C (Fugentemperatur) verpreßt. Nach 24 Stunden Lagerung im Raumklima wurde die Originalhaftung bestimmt. Sie betrug 6,7 N/5 cm.

### Beispiel 8

78,0 g AH-Salz, 58,5 g Hexamethylendiamin (59 %) und 158,6 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren 548,0 g Polycaprolacton-Diol mit einer mittleren Molmasse von ca. 1000 g/Mol sowie 0,8 g eines Veresterungskatalysators eingetragen. Es wurde Vakuum angelegt, der Enddruck lag bei ca. 1 mbar.

### Beispiel 9

185,2 g AH-Salz, 136,7 g Hexamethylendiamin (60 %) und 208,2 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren ein Gemisch bestehend aus 380,0 g Polycaprolacton-Diol mit einer mittleren Molmasse von ca. 1000 g/Mol und 10,0 g eines trifunktionellen Polycaprolactonpolyols mit einer mittleren Molmasse von ca. 1000 g/Mol sowie 0,65 g eines Veresterungskatalysators eingetragen. Es wurde Vakuum angelegt, der Enddruck lag bei ca. 1 mbar.

### Beispiel 10

238,8 g AH-Salz, 45,4 g Hexamethylendiamin (100 %) und 132,0 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren 370,0 g Polycaprolacton-Diol mit einer mittleren Molmasse von ca. 1000 g/Mol sowie 0,8 g eines Veresterungskatalysators eingetragen. Es wurde Vakuum angelegt, der Enddruck lag bei ca. 1 mbar.

### Beispiel 11

356,8 g AH-Salz, 27,8 g Hexamethylendiamin (100 %) und 115,1 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren 442,0 g Polycaprolacton-Diol mit einer mittleren Molmasse von ca. 1000 g/Mol sowie 0,8 g eines Veresterungskatalysators eingetragen. Es wurde Vakuum angelegt, der Enddruck lag bei ca. 1 mbar.

### Beispiel 12

239,6 g AH-Salz, 177,3 g Hexamethylendiamin (60 %) und 269,4 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren 380,0 g Polycaprolacton-Diol mit einer mittleren Molmasse von ca. 780 g/Mol und 1,6 g eines Veresterungskatalysators eingetragen. Es wurde Vakuum angelegt, der Enddruck lag bei ca. 1 mbar.

### Beispiel 13

96,4 g AH-Salz, 72,3 g Hexamethylendiamin (60 %) und 137,1 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren 673,5 g Polycaprolacton-Diol mit einer mittleren Molmasse von ca. 2000 g/Mol sowie 0,8 g eines Veresterungskatalysators eingetragen. Es wurde Vakuum angelegt, der Enddruck lag bei ca. 1 mbar.

### Beispiel 14

200,8 g AH-Salz, 148,2 g Hexamethylendiamin (60 %) und 184,9 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren 423,6 g Priplast® 3194 mit einer mittleren Molmasse von ca. 2000 g/Mol und 1,6 g eines Veresterungskatalysators eingetragen. Es wurde Vakuum angelegt, der Enddruck lag bei ca. 1 mbar.

### Beispiel 15

200,8 g AH-Salz, 148,2 g Hexamethylendiamin (60 %) und 184,9 g Azelainsäure wurden unter Stickstoffatomsphäre bei Temperaturen von 180 bis 250 °C zu einem Präpolymer kondensiert.

Unter Rühren wurden in die Schmelze des CoPA-Präpolymeren 399,6 g Priplast® 3l92 mit einer mittleren Molmasse von ca. 2000 g/Mol und 1,6 g eines Veresterungskatalysators eingetragen. Es wurde Vakuum angelegt, der Enddruck lag bei ca. 1 mbar.

### Beispiel 16 - Herstellung von Flachfolien und Spritzgießen

Die unter den Beispielen 1 bis 13 erhaltenen Formmassen wurden unter Kühlung granuliert und vor der thermoplastischen Weiterverarbeitung auf einen Wassergehalt unter 0,1 % getrocknet. Die Trocknung erfolgt im Vakuumtrockenschrank bei 50 °C und 20 mbar.

Mit einem Brabender Laborextruder ausgerüstet mit Flachfoliendüse und Walzenabzug wurden Flachfolien mit Dicken von 50 bis 200 pm hergestellt.

Mit einer Arburg Allrounder 320-210-750 wurden DIN-Zugstäbe und Kleindinbalken gespritzt.

### Beispiel 17 - Abbauverhalten

Die biologische Abbaubarkeit wurde anhand von Folien mit einer durchschnittlichen Dicke von 50 µm und einer Größe von 100 cm² in einer Laborkompostierung untersucht.

Als Kompostrohstoff wurde eine Standardzusammensetzung nach O.J. Huennerkopf verwendet. Als Inokulum dienten Obst- und Gemüseabfälle.

Die Prüffolien und die Kompostrohstoffe wurden in Dewargefäßen mit einem Inhalt von ca. 4 ℓ überführt und durch ein Schlauchsystem aktiv belüftet. Der Temperaturanstieg innerhalb der ersten Tage der Verrottung betrug ca. 10 °C/Tag. Nach 5 bis 7 Tagen konnten Temperaturen von 60 bis 67 °C gemessen werden. Nach weiteren 5 bis 7 Tagen begann sich die Kompostmasse wieder abzukühlen und erreichte nach 4-wöchiger Inkubationszeit eine Temperatur von 26 bis 32 °C. Nach Öffnen und Mischen der Kompostmasse konnte dann in allen Fällen ein leichter Temperaturanstieg registriert werden.

Veränderungen der Prüffolien innerhalb der ersten 4 bis 8 Wochen:

Die Prüffolien färbten sich gelb bis braun, verloren meist ihre Transparenz und zeigten Risse und Löcher über die gesamte Folienfläche. Die Folien waren dünner geworden, scharfe Ränder nicht mehr vorhanden, oft fehlten ganze Teile. Die Reißfestigkeit und Reißdehnung nahm im Verlauf der Kompostierung dramatisch ab.

Nach 12 Wochen Kompostierung konnten die meisten Folien nicht mehr wiedeigefunden werden, die Folienstücke der noch vorhandenen Materialien hatten bereits sehr stark an Masse verloren und sind teilweise desintegriert. Bei weiterer Kompostierung werden auch diese Materialien vollständig abgebaut.

Die Masseverluste, aufgeschlüsselt nach 4, 8 und 12 Wochen Inkubationszeit, sind in der Tabelle 1 aufgelistet.

In der folgenden Tabelle 1 sind weiterhin die mechanischen Eigenschaften der erfindungsgemäßen Block-Copolyesterpolyamide gemäß den Beispielen 1 bis 15 zusammengefaßt.

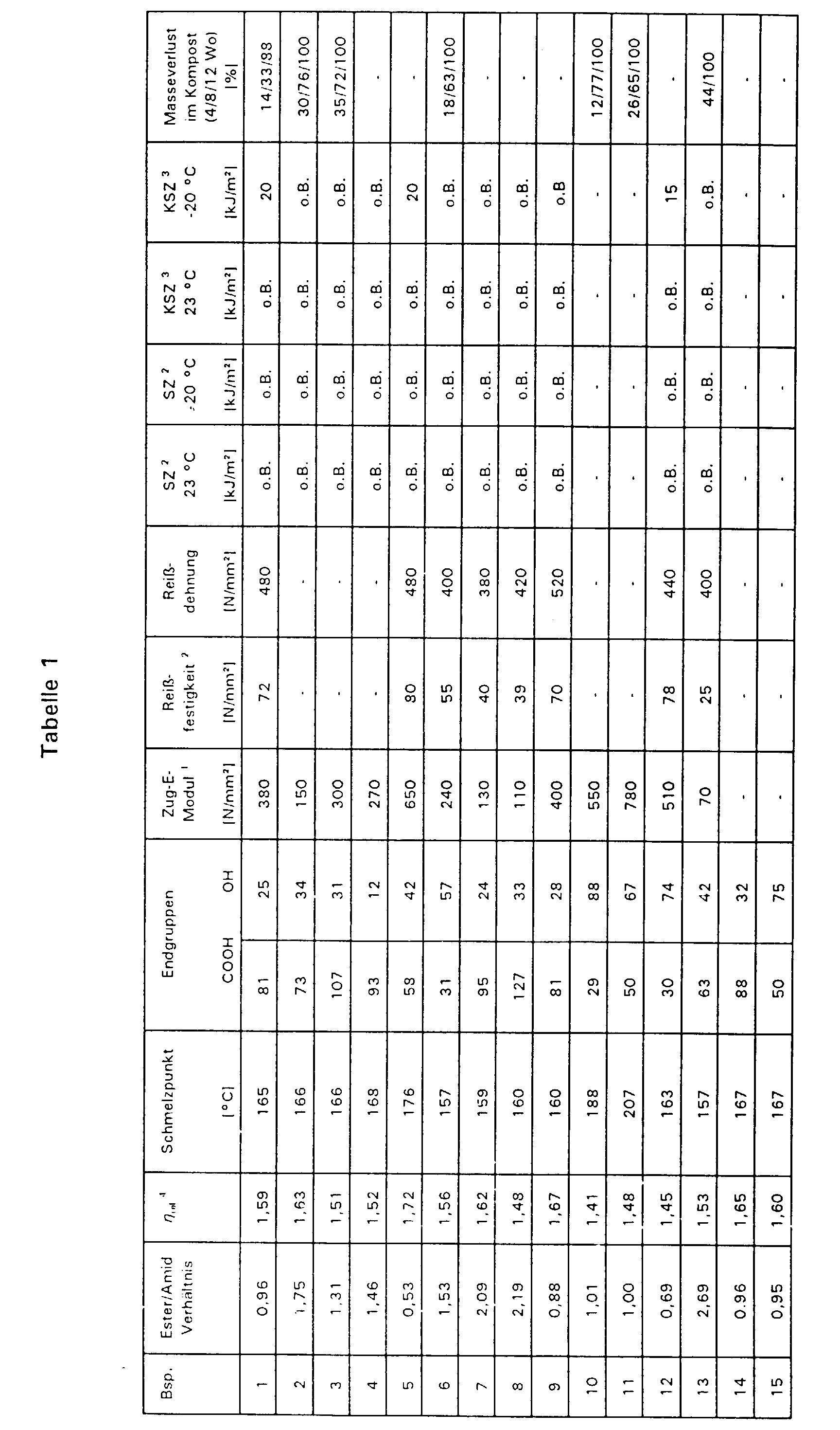

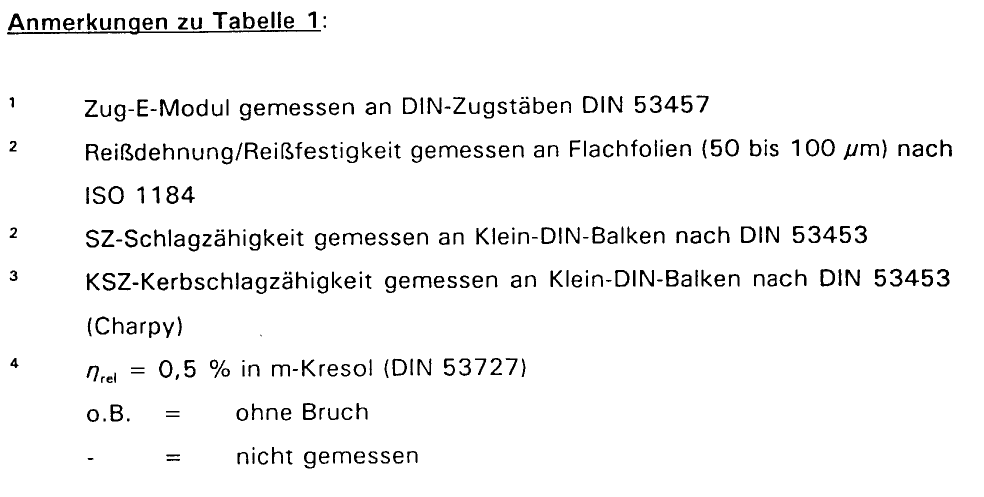

**Tabelle 2**

| **Titrationswerte der in den Beispielen 1 bis 15 eingesetzten Polyole** | | |
|---|---|---|
| | | µÄqu/g OH |
| Polycaprolactpn-Diol mit Molmasse | ca. 780 | 2549 |
| Polycaprolacton-Diol mit Molmasse | ca. 1000 | 1822 |
| Polycaprolacton-Diol mit Molmasse | ca. 2000 | 1040 |
| Polycaprolacton-Triol mit Molmasse | ca. 1000 | 2952 |
| Priplast®3192 mit Molmasse | ca. 2000 | 1059 |
| Priplast®3194 mit Molmasse | ca. 2000 | 996 |

## Patentansprüche

1. Teilkristalline Block-Copolyesterpolyamide aus unterschiedlich strukturierten Segmenten, dadurch gekennzeichnet, daß die Block-Copolyesterpolyamide biologisch abbaubar sind und als Segmente
- mindestens ein Polyester- oder Copolyester-Block mit einer einheitlichen zahlenmittleren Molmasse zwischen 340 und 10.000 g/Mol und
- mindestens ein Polyamid- oder Copolyamid-Block mit einer einheitlichen zahlenmittleren Molmasse zwischen 400 und 3.000 g/Mol und
- wahlweise ein Copolyesteramid-Block mit einer einheitlichen zahlenmittleren Molmasse zwischen 500 und 5.000 g/Mol vorhanden sind.

2. Block-Copolyesterpolyamid nach Anspruch 1, dadurch gekennzeichnet, daß die Polyester-, die Copolyester-, die Polyamid-, und die Copolyamid- und Copolyesterpolyamidblöcke aus aliphatischen Monomereinheiten aufgebaut sind, wobei bis zu 20 Mol-% der gesamten Monomeren durch aromatische Einheiten ersetzt sein können.

3. Block-Copolyesterpolyamide nach Anspruch 1 und Anspruch 2, dadurch gekennzeichnet, daß die Polyesterblöcke und die Copolyester-blöcke aus Lactonen oder Hydroxycarbonsäuren aufgebaut sind und eine zahlenmittlere Molmasse von 340 bis 6.000 g/Mol, bevorzugt 340 bis 3.000 g/Mol, besonders bevorzugt von 340 bis 1.500 g/Mol, aufweisen.

4. Block-Copolyesterpolyamide nach den Ansprüchen 1 und 2, dadurch gekennzeichnet, daß die Polyesterblöcke und die Copolyesterblöcke aus Lactonen oder Hydroxycarbonsäuren aufgebaut sind und durch geringe Anteile an höherfunktionellen aliphatischen Alkoholen eine Funktionalität von mehr als 2, insbesondere von 2 bis 4 aufweisen.

5. Block-Copolyesterpolyamide nach den Ansprüchen 3 und 4, dadurch gekennzeichnet, daß die Lactone bevorzugt Caprolacton und Butyrolacton und die Hydroxycarbonsäuren α-, β-, γ- und ω-Hydroxycarbonsäuren, deren Cooligomere sowie deren cyclische Ester, ausgewählt aus der Gruppe der Dilactide und Diglycolide, sind.

6. Block-Copolyesterpolyamide nach einem der vorhergehenden Ansprüche, dadurch gekennzeichnet, daß die Polyester oder Copolyesterblökke aus bifunktionellen Alkoholen, insbesondere aus solchen mit 2 bis 10 C-Atomen und aus Dicarbonsäuren, besonders aus solchen mit 2 bis 44 C-Atomen, insbesondere aus solchen Dicarbonsäuren mit 2 bis 18 C-Atomen und mit 36 C-Atomen und mit 44 C-Atomen, aufgebaut sind.

7. Block-Copolyesterpolyamide nach den Ansprüchen 1 und 2, dadurch gekennzeichnet, daß die Polyamid- oder Copolyamidblöcke aufgebaut sind aus Monomeren, ausgewählt aus der Gruppe Lactam mit 6 bis 12 C-Atomen, ω-Aminosäuren mit 6 bis 12 C-Atomen, aliphatische Diamine mit 2 bis 10 C-Atomen und Dicarbonsäuren mit 2 bis 44 C-Atomen, insbesondere Dicarbonsäuren mit 2 bis 18 C-Atomen und Dicarbonsäuren mit 36 C-Atomen und mit 44 C-Atomen.

8. Block-Copolyesterpolyamide nach den Ansprüchen 1 und 2, dadurch gekennzeichnet, daß die Copolyesteramidblöcke aufgebaut sind aus der Gruppe der Monomere der Polyester-, Copolyester-, Polyamid-, Copolyamidblöcke und aus linearen aliphatischen Aminoalkoholen mit 2 bis 8 C-Atomen.

9. Block-Copolyesterpolyamide nach Anspruch 2, dadurch gekennzeichnet, daß die aromatischen Einheiten Isophthalsäure- und Terephthalsäure-Einheiten sind.

10. Block-Copolyesterpolyamide nach einem der vorhergehenden Ansprüche 1 bis 9, dadurch gekennzeichnet, daß die Blöcke aus der Gruppe Polyester, Copolyester und Copolyesteramide mindestens 95 % OH-Endgruppen aufweisen.

11. Block-Copolyesterpolyamide nach einem der vorhergehenden Ansprüche 1 bis 9, dadurch gekennzeichnet, daß die Blöcke aus der Gruppe Polyamide und Copolyamide mindestens 95 % Carboxyl-Endgruppen aufweisen.

12. Block-Copolyesterpolyamide nach einem der vorhergehenden Ansprüche 1 bis 11, dadurch gekennzeichnet, daß die Polyester- oder Copolyester-Blöcke linear sind und eine zahlenmittlere Molmasse zwischen 340 und 2.000 g/Mol aufweisen.

13. Block-Copolyesterpolyamide nach einem der vorhergehenden Ansprüche 1 bis 11, dadurch gekennzeichnet, daß die Polyester- oder Copolyester-Blöcke linear sind und eine zahlenmittlere Molmasse zwischen 2.000 und 6.000 g/Mol aufweisen.

14. Block-Copolyesterpolyamide nach einem der vorhergehenden Ansprüche 1 bis 11, dadurch gekennzeichnet, daß die Polyamid- oder Copolyamid-Blöcke linear sind und eine zahlenmittlere Molmasse zwischen 400 und 1.000 g/Mol aufweisen.

15. Block-Copolyesterpolyamide nach einem der vorhergehenden Ansprüche 1 bis 11, dadurch gekennzeichnet, daß die Polyamid- oder der Copolyamid-Blöcke linear sind und eine zahlenmittlere Molmasse zwischen 1.000 und 2.000 g/Mol aufweisen.

16. Block-Copolyesterpolyamide nach einem der vorhergehenden Ansprüche 1 bis 11, dadurch gekennzeichnet, daß mindestens zwei lineare Polyester- oder Copolyester-Blöcke vorhanden sind, deren zahlenmittlere Molmassen sich um mindestens 500 g/Mol, bevorzugt um 1.000 g/Mol unterscheiden.

17. Block-Copolyesterpolyamide nach einem der vorhergehenden Ansprüche, dadurch gekennzeichnet, daß die Polyester-, die Copolyester- und die Copolyesteramidblöcke eine Funktionalität von 2 bis 4 aufweisen.

18. Block-Copolyesterpolyamide nach einem der vorhergehenden Ansprüchen, dadurch gekennzeichnet, daß mindestens ein linearer Polyester-oder Copolyester-Block mit einer zahlenmittleren Molmasse von 500 bis 10.000 g/Mol und mindestens ein höherfunktioneller Polyester-oder Copolyester-Block mit einer zahlenmittleren Molmasse von 340 bis 3.000 g/Mol vorhanden ist.

19. Block-Copolyesterpolyamide nach einem der vorhergehenden Ansprüche, dadurch gekennzeichnet, daß zusätzlich mindestens ein statistischer Copolyester-Block mit einer einheitlichen zahlenmittleren Molmasse zwischen 500 und 5.000 g/Mol vorhanden ist.

20. Block-Copolyesterpolyamide nach einem der vorhergehenden Ansprüche, dadurch gekennzeichnet, daß in den Polyesteramid- oder Copolyesteramid-Blöcken das Ester/Amid-Verhältnis über 1,2, bevorzugt zwischen 1,2 und 20,0 liegt.

21. Block-Copolyesterpolyamide nach einem der vorhergehenden Ansprüche, dadurch gekennzeichnet, daß das Gesamt-Ester/Amid-Verhältnis des Blockpolymeres über 0,2, bevorzugt zwischen 0.6 und 15,0 liegt.

22. Verwendung der biologisch abbaubaren teilkristallinen Block-Copolyesterpolyamide nach den Ansprüchen 1 bis 22 zur Herstellung von Fasern, Folien, Formkörpern und Schmelzkleber.

23. Verfahren zur Herstellung von biologisch abbaubaren teilkristallinen Block-Copolyesterpolyamiden nach den Ansprüchen 1 bis 22, dadurch gekennzeichnet, daß
a) in einem ersten Polykondensations-Schritt die Polyamid- oder Copolyamid-Blöcke bis zu einer definierten zahlenmittleren Molmasse vorpolymerisiert werden, nachfolgend
b) die Polyester-, Copolyester- oder Copolyesteramidblöcke als fertige Ketten-Bausteine zugegeben und
c) unter Vakuum in Gegenwart von Katalysatoren in einem zweiten Polykondensationsschritt zum Blockcopolyesterpolyamid fertig kondensiert,
d) ausgetragen oder zu Formkörpern weiterverarbeitet werden.

24. Verfahren zur Herstellung von teilkristallinen Block-Copolyesterpolyamiden nach Anspruch 23, dadurch gekennzeichnet, daß durch angepaßte Temperatur- und Druckführung sowie Katalysatorkonzentration die zahlenmittleren Molmassen der eingesetzten Polymer-Blockbausteine während des zweiten Polykondensationsschritts nicht verändert werden.

25. Verfahren gemäß einem der Ansprüche 23 und 24, dadurch gekennzeichnet, daß man eine Temperatur von 180 bis 260 °C und einen Druck im Bereich von Atmosphärendruck bis zu 18 bar anlegt, dann in Schritt c) langsam entspannt und stufenweise ein Vakuum anlegt.

26. Formkörper, hersteilbar aus teilkristallinen Block-Copolyesterpolyamiden nach den Ansprüchen 1 bis 21 durch Blasformen, Extrudieren, Spritzgießen und Schmelzspinnen.

27. Schmelzkleber, herstellbar aus teilkristalliunen Block-Copolyesterpolyamiden nach den Ansprüchen 1 bis 22 durch Konfektionieren in bekannter Weise.

## Claims

1. Semi-crystalline block copolyesterpolyamides made from differently structured segments, characterized in that the block copolyesterpolyamides are biodegradable and the segments present are
- at least one polyester or copolyester block with a unit number-average molar mass of from 340 to 10,000 g/mol and
- at least one polyamide or copolyamide block with a unit number-average molar mass of from 400 to 3000 g/mol and
- if desired a copolyesteramide block with a unit number-average molar mass of from 500 to 5000 g/mol.

2. Block copolyesterpolyamide according to Claim 1, characterized in that the polyester blocks, the copolyester blocks, the polyamide blocks and the copolyamide blocks and copolyesterpolyamide blocks have been built up from aliphatic monomer units, except that up to 20 mol% of all of the monomers may be replaced by aromatic units.

3. Block copolyesterpolyamides according to Claim 1 and Claim 2, characterized in that the polyester blocks and the copolyester blocks have been built up from lactones or hydroxycarboxylic acids and have a number-average molar mass of from 340 to 6000 g/mol, preferably from 340 to 3000 g/mol, particularly preferably from 340 to 1500 g/mol.

4. Block copolyesterpolyamides according to Claims 1 and 2, characterized in that the polyester blocks and the copolyester blocks have been built up from lactones or hydroxycarboxylic acids and, as a result of small proportions of higher-functional aliphatic alcohols, have a functionality of greater than 2, in particular of from 2 to 4.

5. Block copolyesterpolyamides according to Claims 3 and 4, characterized in that the lactones are preferably caprolactone and butyrolactone and the hydroxycarboxylic acids are α-, β-, γ- and ω-hydroxycarboxylic acids and their cooligomers and their cyclic esters selected from the group consisting of the dilactides and diglycolides.

6. Block copolyesterpolyamides according to one of the preceding claims, characterized in that the polyesters or copolyester blocks have been built up from bifunctional alcohols, in particular from those having from 2 to 10 carbon atoms, and from dicarboxylic acids, in particular from those having from 2 to 44 carbon atoms, in particular from those dicarboxylic acids having from 2 to 18 carbon atoms or having 36 carbon atoms or having 44 carbon atoms.

7. Block copolyesterpolyamides according to Claims 1 and 2, characterized in that the polyamide blocks or copolyamide blocks have been built up from monomers selected from the group consisting of lactams having from 6 to 12 carbon atoms, ω-amino acids having from 6 to 12 carbon atoms, aliphatic diamines having from 2 to 10 carbon atoms, and dicarboxylic acids having from 2 to 44 carbon atoms, in particular dicarboxylic acids having from 2 to 18 carbon atoms and dicarboxylic acids having 36 carbon atoms or having 44 carbon atoms.

8. Block copolyesterpolyamides according to Claims 1 and 2, characterized in that the copolyesteramide blocks have been built up from the group of monomers of the polyester blocks, copolyester blocks, polyamide blocks and copolyamide blocks and from linear aliphatic amino alcohols having from 2 to 8 carbon atoms.

9. Block copolyesterpolyamides according to Claim 2, characterized in that the aromatic units are isophthalic acid units and terephthalic acid units.

10. Block copolyesterpolyamides according to one of the preceding Claims 1 to 9, characterized in that the blocks selected from the group of polyesters, copolyesters and copolyesteramides have at least 95% of OH end groups.

11. Block copolyesterpolyamides according to one of the preceding Claims 1 to 9, characterized in that the blocks selected from the group consisting of polyamides and copolyamides have at least 95% of carboxyl end groups.

12. Block copolyesterpolyamides according to one of the preceding Claims 1 to 11, characterized in that the polyester blocks or copolyester blocks are linear and have a number-average molar mass of from 340 to 2000 g/mol.

13. Block copolyesterpolyamides according to one of the preceding Claims 1 to 11, characterized in that the polyester blocks or copolyester blocks are linear and have a number-average molar mass of from 2000 to 6000 g/mol.

14. Block copolyesterpolyamides according to one of the preceding Claims 1 to 11, characterized in that the polyamide blocks or copolyamide blocks are linear and have a number-average molar mass of from 400 to 1000 g/mol.

15. Block copolyesterpolyamides according to one of the preceding Claims 1 to 11, characterized in that the polyamide blocks or copolyamide blocks are linear and have a number-average molar mass of from 1000 to 2000 g/mol.

16. Block copolyesterpolyamides according to one of the preceding Claims 1 to 11, characterized in that at least two linear polyester blocks or copolyester blocks are present whose number-average molar masses differ by at least 500 g/mol, preferably by 1000 g/mol.

17. Block copolyesterpolyamides according to one of the preceding claims, characterized in that the polyester blocks, the copolyester blocks and the copolyesteramide blocks have a functionality of from 2 to 4.

18. Block copolyesterpolyamides according to one of the preceding claims, characterized in that at least one linear polyester block or linear copolyester block with a number-average molar mass of from 500 to 10,000 g/mol and at least one relatively highly functionalized polyester block or relatively highly functionalized copolyester block, in each case with a number-average molar mass of from 340 to 3000 g/mol, is present.

19. Block copolyesterpolyamides according to one of the preceding claims, characterized in that at least one random copolyester block with a unit number-average molar mass of from 500 to 5000 g/mol is also present.

20. Block copolyester polyamides according to one of the preceding claims, characterized in that, in the polyesteramide blocks or in the copolyesteramide blocks, the ester/amide ratio is greater than 1.2, preferably from 1.2 to 20.0.

21. Block copolyesterpolyamides according to one of the preceding claims, characterized in that the overall ester/amide ratio of the block polymer is greater than 0.2, preferably from 0.6 to 15.0.

22. The use of the biodegradable semi-crystalline block copolyesterpolyamides according to Claims 1 to 22 for producing fibres, films, mouldings and hot-melt adhesives.

23. Process for preparing biodegradable semi-crystalline block copolyesterpolyamides according to Claims 1 to 22, characterized in that
a) in a first polycondensation step, the polyamide blocks or copolyamide blocks are prepolymerized to a defined number-average molar mass, then
b) the polyester blocks, copolyester blocks or copolyesteramide blocks are added as finished chain-type building blocks and
c) are condensed to completion under subatmospheric pressure in the presence of catalysts in a second polycondensation step to give the block copolyesterpolyamide and
d) are discharged or further processed to give mouldings.

24. Process for preparing semi-crystalline block copolyesterpolyamides according to Claim 23, characterized in that, due to an appropriate temperature profile and pressure profile and catalyst concentration, the number-average molar masses of the polymer block building blocks used are not altered during the second polycondensation step.

25. Process according to one of Claims 23 and 24, characterized in that the temperature applied is from 180 to 260°C and the pressure applied is in the range from atmospheric pressure to 18 bar, then in step c) pressure is slowly released and subatmospheric pressure is progressively applied.

26. Moulding capable of being produced from semi-crystalline block copolyesterpolyamides according to Claims 1 to 21 by blow moulding, extrusion, injection moulding or melt spinning.

27. Hot-melt adhesive capable of being produced from semi-crystalline block copolyesterpolyamides according to Claims 1 to 22 by further processing in a known manner.

## Revendications

1. Copolyester-polyamides séquencés partiellement cristallins formés de segments ayant des structures différentes, caractérisés en ce que les copolyester-polyamides séquencés sont biodégradables et contiennent comme segments :
- au moins une séquence de polyester ou de copolyester ayant un poids moléculaire moyen en nombre homogène compris entre 340 et 10 000 g/mole et
- au moins une séquence de polyamide ou de copolyamide ayant un poids moléculaire moyen en nombre homogène compris entre 400 et 3000 g/mole et
- éventuellement une séquence de copolyester-amide ayant un poids moléculaire moyen en nombre homogène compris entre 500 et 5000 g/mole.

2. Copolyester-polyamides séquencés selon la revendication 1, caractérisés en ce que les séquences de polyester, de copolyester, de polyamide, de copolyamide et de copolyester-polyamide sont constituées de motifs monomères aliphatiques, jusqu'à 20 % en moles de l'ensemble des monomères pouvant être remplacés par des motifs aromatiques.

3. Copolyester-polyamides séquences selon la revendication 1 et la revendication 2, caractérisés en ce que les séquences de polyester et les séquences de copolyester sont constituées de lactones ou d'acides hydroxycarboxyliques et présentent un poids moléculaire moyen en nombre de 340 à 6 000 g/mole, de préférence de 340 à 3000 g/mole, et de façon particulièrement préférée de 340 à 1500 g/mole.

4. Copolyester-polyamides séquencés selon les revendications 1 et 2, caractérisés en ce que les séquences de polyester et les séquences de copolyester sont constituées de lactones ou d'acides hydroxycarboxyliques et présentent une fonctionnalité supérieure à 2, en particulier de 2 à 4, grâce à de faibles proportions d'alcools aliphatiques supérieurs.

5. Copolyester-polyamides séquencés selon les revendications 3 et 4, caractérisés en ce que les lactones sont, de préférence, la caprolactone et la butyrolactone, et les acides hydroxycarboxyliques sont des acides α-, β-, γ- et ω-hydroxycarboxyliques, leurs co-oligomères ainsi que leurs esters cycliques, choisis dans l'ensemble des dilactides et des diglycolides.

6. Copolyester-polyamides séquencés selon l'une des revendications précédentes, caractérisés en ce que les séquences de polyester ou de copolyester sont constituées de diols, en particulier de diols ayant de 2 à 10 atomes de carbone, et d'acides dicarboxyliques, en particulier ayant de 2 à 44 atomes de carbone, en particulier de tels acides dicarboxyliques ayant de 2 à 18 atomes de carbone et avec 36 atomes de carbone et avec 44 atomes de carbone.

7. Copolyester-polyamides séquencés selon les revendications 1 et 2, caractérisés en ce que les séquences de polyamide ou de copolyamide sont constituées de monomères choisis dans l'ensemble constitué par un lactame ayant de 6 à 12 atomes de carbone, des ω-amino-acides ayant de 6 à 12 atomes de carbone, des diamines aliphatiques ayant de 2 à 10 atomes de carbone et des acides dicarboxyliques ayant de 2 à 44 atomes de carbone, en particulier des acides dicarboxyliques ayant de 2 à 18 atomes de carbone et des acides dicarboxyliques ayant 36 atomes de carbone et 44 atomes de carbone.

8. Copolyester-polyamides séquencés selon les revendications 1 et 2, caractérisés en ce que les séquences de copolyester-amide sont constituées d'éléments choisis dans l'ensemble des monomères des séquences de polyester, de copolyester, de polyamide et de copolyamide et d'amino-alcools aliphatiques linéaires ayant de 2 à 8 atomes de carbone.

9. Copolyester-polyamides séquencés selon la revendication 2, caractérisés en ce que les motifs aromatiques sont des motifs d'acide isophtalique et d'acide téréphtalique.

10. Copolyester-polyamides séquences selon l'une des revendications 1 à 9 précédentes, caractérisés en ce que les séquences du groupe des polyesters, des copolyesters et des copolyester-amides présentent au moins 95 % de groupes OH terminaux.

11. Copolyester-polyamides séquencés selon l'une des revendications 1 à 9 précédentes, caractérisés en ce que les séquences du groupe des polyamides et des copolyamides présentent au moins 95 % de groupes carboxyle terminaux.

12. Copolyester-polyamides séquencés selon l'une des revendications 1 à 11 précédentes, caractérisés en ce que les séquences de polyester ou de copolyester sont linéaires et présentent un poids moléculaire moyen en nombre compris entre 340 et 2000 g/mole.

13. Copolyester-polyamides séquencés selon l'une des revendications 1 à 11 précédentes, caractérisés en ce que les séquences de polyester ou de copolyester sont linéaires et présentent un poids moléculaire moyen en nombre compris entre 2000 et 6000 g/mole.

14. Copolyester-polyamides séquencés selon l'une des revendications 1 à 11 précédentes, caractérisés en ce que les séquences de polyamide ou de copolyamide sont linéaires et présentent un poids moléculaire moyen en nombre compris entre 400 et 1000 g/mole.

15. Copolyester-polyamides séquencés selon l'une des revendications 1 à 11 précédentes, caractérisés en ce que les séquences de polyamide ou de copolyamide sont linéaires et présentent un poids moléculaire moyen en nombre compris entre 1000 et 2000 g/mole.

16. Copolyester-polyamides séquencés selon l'une des revendications 1 à 11 précédentes, caractérisés en ce qu'au moins deux séquences linéaires de polyester ou de copolyester sont présentes, dont les poids moléculaires moyens en nombre diffèrent d'au moins 500 g/mole, de préférence de 1000 g/mole.

17. Copolyester-polyamides séquencés selon l'une des revendications précédentes, caractérisés en ce que les séquences de polyester, de copolyester et de copolyester-amide présentent une fonctionnalité de 2 à 4.

18. Copolyester-polyamides séquencés selon l'une des revendications précédentes, caractérisés en ce qu'au moins une séquence linéaire de polyester ou de copolyester est présente, ayant un poids moléculaire moyen en nombre de 500 à 10 000 g/mole, et au moins une séquence de polyester ou de copolyester à fonctionnalité supérieure est présente, ayant un poids moléculaire moyen en nombre de 340 à 3000 g/mole.

19. Copolyester-polyamides séquencés selon l'une des revendications précédentes, caractérisés en ce que, en outre, au moins une séquence statistique de copolyester est présente, ayant un poids moléculaire unitaire moyen en nombre compris entre 500 et 5000 g/mole.

20. Copolyester-polyamides séquencés selon l'une des revendications précédentes, caractérisés en ce que, dans les séquences de polyester-amide ou de copolyester-amide, le rapport ester/amide est supérieur à 1,2, de préférence compris entre 1,2 et 20,0.

21. Copolyester-polyamides séquencés selon l'une des revendications précédentes, caractérisés en ce que le rapport esters totaux/amide du polymère séquencé est supérieur à 0,2, de préférence compris entre 0,6 et 15,0.

22. Utilisation des copolyester-polyamides séquencés partiellement cristallins biodégradables selon les revendications 1 à 21 pour la fabrication de fibres, de feuilles, de corps moulés et de colles thermoplastiques.

23. Procédé de préparation de copolyester-polyamides séquencés partiellement cristallins biodégradables selon les revendications 1 à 22, caractérisé en ce que :
a) lors d'une première étape de polycondensation, on prépolymérise les séquences de polyamide ou de copolyamide jusqu'à l'obtention d'un poids moléculaire moyen en nombre défini, ensuite
b) on ajoute les séquences de polyester, de copolyester ou de copolyester-amide en tant qu'éléments finis de la chaîne et
c) lors d'une seconde étape de polycondensation, on effectue la condensation finale en copolyester-polyamide séquencé, sous vide, en présence de catalyseurs,
d) on décharge le produit ou on le transforme en corps moulés.

24. Procédé de préparation de copolyester-polyamides séquencés partiellement cristallins selon la revendication 23, caractérisé en ce que, grâce à un contrôle approprié de la température et de la pression ainsi qu'à la concentration des catalyseurs, les poids moléculaires moyens en nombre des séquences utilisées dans le polymère ne peuvent pas être modifiés pendant la seconde étape de polycondensation.

25. Procédé selon l'une des revendications 23 et 24, caractérisé en ce qu'on applique une température de 180 à 260°C et une pression comprise entre la pression atmosphérique et 18 bars, ensuite, on relâche lentement la pression pendant l'étape (c) et on applique un vide par paliers.

26. Corps moulés pouvant être fabriqués à partir de copolyester-polyamides séquencés partiellement cristallins selon les revendications 1 à 21 par soufflage, extrusion, moulage par injection et filage en fusion.

27. Colle thermoplastique pouvant être fabriquée à partir de copolyester-polyamides séquencés partiellement cristallins selon les revendications 1 à 21 par confection d'une manière connue.
